# EUROPÄISCHE PATENTSCHRIFT

(11) **EP 0 499 931 B1**
(45) Veröffentlichungstag und Bekanntmachung des Hinweises auf die Patenterteilung: **21.06.1995**
(21) Anmeldenummer: 92102161.4
(22) Anmeldetag: 10.02.1992
(51) Int. Cl.: B01D 53/72

(54) **Verwendung eines Katalysators zur Verringerung der Partikelmenge und/oder -grösse im Dieselabgas**
Application of a catalyst to decrease quantity and dimension of particles in Diesel exhaust gas
Application d'un catalyseur pour réduire la quantité et les dimensions de particules dans un gaz d'échappement Diesel

(30) Priorität: 22.02.1991 DE 4105534
(43) Veröffentlichungstag der Anmeldung: 26.08.1992
(73) Patentinhaber: BAYER AG, 51368 Leverkusen (DE); Volkswagen Aktiengesellschaft, 38436 Wolfsburg (DE)
(72) Erfinder: König, Axel, Dr.-Ing., W-3180 Wolfsburg 21 (DE); Held, Wolfgang, Dr.-Ing., W-3180 Wolfsburg 11 (DE); Standt,Ulrich-Dieter, Dr., W-3174 Meine-Wed (DE); Puppe, Lothar, Dr., W-5093 Burscheid (DE)

(56) Entgegenhaltungen:
- EP-A- 0 061 008
- EP-A- 0 305 720
- EP-A- 0 415 410
- EP-A- 0 434 063
- EP-A- 0 462 593

## Beschreibung

Die Erfindung betrifft die Verwendung eines Katalysators zur Verringerung der Partikelmasse und/oder -größe im Abgas einer Dieselmaschine mittels eines Zeolithhaltigen Katalysators mit sauren Eigenschaften.

Bekanntlich besteht ein Problem beim Einsatz von Dieselmaschinen, insbesondere als Antriebsmaschinen für Kraftfahrzeuge, darin, daß Dieselmaschinen Rußpartikel emittieren, deren Austritt in die Umwelt nur mit Schwierigkeiten verhindert werden kann.

Eine bekannte übliche Maßnahme zum Verhindern des Austritts dar Rußpartikel besteht im Einsatz von Filtern, Nachteilig bei derartigen Filtern ist die Gefahr des Zusetzens durch die Rußpartikel nach relativ kurzer Betriebszeit, Demgemäß müssen Maßnahmen zum Regenerieren der Partikelfilter getroffen werden, die beispielsweise in einem kurzzeitigen Erhitzen derselben durch geeignete Vorrichtungen auf die Zündtemperatur dar abgelagerten Rußpartikel bestehen. Derartige Vorrichtungen sind aufwendig und teuer und stellen z.B. für Diesel-Pkw noch keine technische Lösung dar.

Es ist auch bekannt, auf katalytischem Wege die Partikelmasse zu verringern. Hierzu werden Oxidationskatalysatoren eingesetzt, die Platin als aktive Komponente enthalten. Nachteilig bei derartigen Edelmetallkatalysatoren ist, daß sie zwar durch Oxidation der langkettigen Kohlenwasserstoffe im Abgas die Partikelmasse verringern, aber auch oxidierend auf den SO₂-Bestandteil der Abgase wirken, Die damit verbundene Sulfatbildung macht die Partikelmasse hygroskopisch und kann sogar zur Erhöhung der Partikelmasse führen, Daneben ist mit einer Ablagerung von Sulfatpartikeln auf dem Katalysator zu rechnen, wodurch die Wirksamkeit beeinträchtigt werden kann.

Aufgabe dieser Erfindung ist es nun, eine Lösung zu finden, die die beschriebenen Nachteile nicht beinhaltet.

Es wurde nun gefunden, daß Zeolith-haltige Katalysatoren mit sauren bzw. crackenden Eigenschaften die Partikelmasse und/oder -größe und die Kohlenwasserstoffmenge verringern, ohne jedoch das SO₂ im Abgas zu Sulfaten zu oxidieren.

Gegenstand der vorliegenden Erfindung ist nun die Verwendung eines Katalysators zur Verringerung der Partikelmasse und/oder -größe im Abgas einer Dieselmaschine mittels eines Zeolith-haltigen Katalysators mit sauren und mit für langkettige und aromatische Kohlenwasserstoffe crackenden Eigenschaften.

Die Erfindung geht von der Erkenntnis aus, daß die Partikelmenge und die Partikelgröße zu einem wesentlichen Teil durch den Gehalt an langkettigen Kohlenwasserstoffen im Abgas bestimmt ist. Die Wirkung des erfindungsgemäßen Zeolith-haltigen Katalysators besteht darin, daß er im Abgas enthaltene langkettige Kohlenwasserstoffe in kurzkettige spaltet und zum Teil oxidiert, wodurch diese nicht mehr in der Lage sind, sich an die primären Rußpartikel anzulagern. Sofern diese zu einer geringfügig höheren Kohlenwasserstoff-Emission (im folgenden auch mit "HC" bezeichnet) führen, ist das infolge der bei Dieselmaschinen von vornherein niedrigen HC-Werte im Abgas unkritisch.

Die EP-A-0061008 beschreibt die Verwendung von sauren Zeolithen zur Verringerung der Partillelmasse um Abgas von Verbrennungsmotoren.

Die Möglichkeit, die Partikelemissionen durch den beschriebenen Katalysator zu verringern, beruht also auf einer Verringerung der Konzentration an anlagerungsfähigen Kohlenwasserstoffen im Abgas; diese sind darin je nach Motorbetriebszustand in unterschiedlichen Anteilen enthalten, was die verschiedenen Partikelemissionsminderungsgrade bedingt.

Die erfindungsgemäß verwendeten Zeolith-haltigen Katalysatoren weisen crackende Eigenschaften für langkettige und aromatische Kohlenwasserstoffe auf. Diese cracken die langkettigen Kohlenwasserstoffe im Abgasstrom, wobei kurzkettige Kohlenwasserstoffe entstehen, die zwar zu einer geringfügigen höheren Kohlenwasserstoff-Emission führen, die aber infolge der bei Dieselmaschinen von vornherein niedrigen HC-Werte im Abgas unkritisch sind.

Für die erfindungsgemäße Verwendung geeignete Zeolithe umfassen folgende Strukturtypen: Faujasite, Pentasile, Mordenite, ZSM 12, Zeolith β, Zeolith L, Zeolith Ω, ZSM 22, ZSM 23, ZSM 48, EU-1 u.a.

Bevorzugt weist der Zeolith vom Pentasil-Typ ein SiO₂/Al₂O₃-Verhältnis von 25 bis 2000, besonders bevorzugt zwischen 40 und 600, auf.

Zeolithe sind durch die allgemeine Formel (I) charakterisiert:

M¹n[mM²O₂.nSiO₂].qH₂O I

Hierin bedeuten
- M¹: ein Äquivalent eines austauschbaren Kations, dessen Anzahl dem Anteil von M² entspricht;
- M²: ein dreiwertiges Element, welches gemeinsam mit dem Si das oxidische Gerüst des Zeoliths bildet;
- n/m: das SiO₂/M²O₂-Verhältnis
- q: die Menge des absorbierten Wassers.

Zeolithe sind von ihrer Grundstruktur her kristalline Alumosilikate, die aus einem Netzwerk von SiO₄- bzw. M²O₄-Tetraedern aufgebaut sind. Die einzelnen Tetraeder sind mit Sauerstoffbrücken über die Ecken der Tetraeder untereinander verknüpft und bilden ein räumliches Netzwerk, das gleichmäßig von Kanälen und Hohlräumen durchzogen ist. Die einzelnen Zeolithstrukturen unterscheiden sich durch die Anordnung und Größe der Kanäle und Hohlräume sowie durch ihre Zusammensetzung. Als Ausgleich für die negative Ladung des Gitters, die durch den Anteil an M² zustande kommt, sind austauschbare Kationen eingelagert. Die absorbierte Wasserphase qH₂O ist reversibel entfernbar, ohne daß das Gerüst seine Struktur verliert.

M² ist vielfach Aluminium, kann aber durch andere dreiwertige Elemente teilweise oder ganz substituiert sein.

Eine ausführliche Darstellung von Zeolithen ist beispielsweise in der Monographie von D.W. Breck "Zeolithe Molecular Sieves, Structure, Chemistry and Use", J. Wiley & Sons, New York, 1974, gegeben. Eine weitere Darstellung, insbesondere der SiO₂-reicheren Zeolithe, die für katalytische Anwendungen interessant sind, findet sich in der Monographie von P.A. Jacobs and J.A. Martens "Synthesis of High-Silica Aluminosilicate Zeolith", Studies in Surface Science and Catalysis, Vol. 33, Ed. B. Delmon und J.T. Yates, Elsevier, Amsterdam-Oxford-New York-Tokyo 1987.

In den erfindungsgemäß verwendeten Zeolithen ist M² ein oder mehrere Elemente aus der Gruppe Al, B,Ga, In, Fe, Cr, V, As und Sb, in bevorzugter Weise ein oder mehrere Elemente aus der Gruppe Al, B, Ga und Fe.

Als austauschbare Kationen M¹ können die genannten Zeolithe beispielsweise solche des Li, Na, K, Rb, Cs, Mg, Ca, Sr, Ba, sowie Übergangsmetallkatione wie z.B. Cr, Mn, Fe, Co, Ni, Cu, Nb, Ma, Ru, Rh, Pd, Ag, Ta, W, Re, Pt enthalten. Ebenfalls geeignet sind Kationen der seltenen Erdgruppe und Protonen.

Bevorzugt weist der erfindungsgemäß verwendete Zeolith eines oder mehrerer der Übergangselemente Cu, Ni, Co, Fe, Cr, Mn und/oder V auf besonders bevorzugt enthält er Cu.

Erfindungsgemäß bevorzugt sind solche Zeolithe der vorher genannten Struktur-Typen, bei denen mindestens ein Teil der Metallkationen gegen Wasserstoffionen ausgetauscht worden sind, bevorzugt 50 - 100%, besonders bevorzugt 80 - 100% aller ursprünglich vorhandenen Metallkationen.

Die sauren H⁺-Formen der Zeolithe werden bevorzugt dadurch hergestellt, daß man Metallionen gegen Ammoniumionen austauscht und den so ausgetauschten Zeolith anschließend calciniert. Eine Wiederholung des Austauschverfahrens und nachgeschalteter Calcinierung unter definierten Bedingungen führt bei Zeolithen des Faujasit-Typs zu sogenannten ultrastabilen Zeolithen, die durch diesen Dealuminierungsvorgang thermisch und hydrothermal stabiler werden. Eine weitere Möglichkeit, SiO₂-reiche Zeolithe vom Faujasit-Typ zu erhalten, besteht in der gezielten Behandlung des wasserfreien Zeoliths bei höheren Temperaturen (≧150°C) mit SiCl₄. Hierbei wird Aluminium entfernt und gleichzeitig Silicium in das Gitter eingebaut. Die Behandlung mit Ammoniumhexafluorosilicat führt unter bestimmten Bedingungen ebenfalls zu einem SiO₂-reichen Faujasit.

Eine weitere Möglichkeit des Austausches von Protonen besteht darin, bei Zeolithen, die ein SiO₂/Al₂O₃-Verhältnis von mindestens 5 aufweisen, das Verfahren mit Mineralsäuren vorzunehmen.

Ebenfalls bekannt ist, daß der Ionenaustausch mit dreiwertigen Seltenerd-Metallionen, einzeln und/oder als Gemische, die bevorzugt Lanthan- bzw. Cer-reich sein können, zu sauren Zentren vor allem beim Faujasit führt. Weiterhin ist bekannt, daß beim Eintausch von Übergangsmetallkationen in Zeolithe saure Zentren entstehen.

Die vorher beschriebenen Zeolithe mit sauren Zentren haben die katalytische Eigenschaft, Kohlenwasserstoffe zu cracken, d.h. in kleinere Bruchstücke zu zerlegen.

Nachfolgend sind in den Beispielen 1 bis 7 die Ergebnisse des erfindungsgemäßen Verfahrens mit zeolithischen Katalysatoren bei der Partikelkonversion und der Kohlenwasserstoffkonversion dargestellt. Durch die beispielhaften Ausführungsformen ist dabei keine Einschränkung der Erfindung zu sehen.

Die Ergebnisse wurden an einem 1,9 l Saugdieselmotor unter den in den Tabellen genannten Bedingungen (Drehzahl,effektiver Mitteldruck als Maß für die Leistung, Katalysatortemperatur) erhalten. Die Katalysatorgröße betrug 102 mm Durchmesser, 152 mm Länge.

### Beispiel 1

H-Zeolith Y, dealuminierter, saurer Zeolith Y mit einem molaren SiO₂/Al₂O₃-Verhältnis von 50.

| Drehzahl / Pme | | Temp. vor Katalysator [°C] | KW-Konversion [%] | Partikel Konversion [%] |
|---|---|---|---|---|
| [l/min] | [bar] | | | |
| 2000 | 1 | 184 | 20 | 49 |
| 2000 | 4 | 357 | 21 | 28 |

### Beispiel 2

H-Zeolith Y, dealuminierter, saurer Zeolith Y mit einem molaren SiO₂/Al₂O₃-Verhältnis von 12.

| Drehzahl / Pme | | Temp. vor Katalysator [°C] | KW-Konversion [%] | Partikel Konversion [%] |
|---|---|---|---|---|
| [l/min] | [bar] | | | |
| 2000 | 1 | 184 | 14 | 34 |
| 2000 | 4 | 357 | 35 | 32 |

### Beispiel 3

H-ZSM5, saurer ZSM5 mit einem SiO₂/Al₂O₃-Verhältnis von ca. 60

| Drehzahl / Pme | | Temp. vor Katalysator [°C] | KW-Konversion [%] | Partikel Konversion [%] |
|---|---|---|---|---|
| [l/min] | [bar] | | | |
| 2000 | 1 | 184 | 11 | 30 |
| 2000 | 4 | 357 | 27 | 25 |

### Beispiel 4

H-ZSM5, saurer ZSM5 mit einem SiO₂/Al₂O₃-Verhältnis von ca. 90

| Drehzahl / Pme | | Temp. vor Katalysator [°C] | KW-Konversion [%] | Partikel Konversion [%] |
|---|---|---|---|---|
| [l/min] | [bar] | | | |
| 2000 | 1 | 184 | 14 | 36 |
| 2000 | 4 | 357 | 12 | 31 |

### Beispiel 5

Se-Zeolith Y, Seltenerd-ausgetauschter, saurer Zeolith Y mit einem SiO₂/Al₂O₃-Verhältnis von 4,9 und einem Austauschgrad von ca. 70%.

| Drehzahl / Pme | | Temp. vor Katalysator [°C] | KW-Konversion [%] | Partikel Konversion [%] |
|---|---|---|---|---|
| [l/min] | [bar] | | | |
| 2000 | 1 | 187 | 17 | 37 |
| 2000 | 4 | 351 | 33 | 31 |

### Beispiel 6

SE-Zeolith Y, Seltenerd-ausgetauschter, saurer Zeolith Y mit einem SiO₂/Al₂O₃-Verhältnis von 4,9 und einem Austauschgrad von ca. 90%.

| Drehzahl / Pme | | Temp. vor Katalysator [°C] | KW-Konversion [%] | Partikel Konversion [%] |
|---|---|---|---|---|
| [l/min] | [bar] | | | |
| 2000 | 1 | 185 | 30 | 46 |
| 2000 | 4 | 356 | 26 | 30 |

### Beispiel 7

Cu-ZSM5, Cu-ausgetauschter, saurer ZSM5 mit einem SiO₂/Al₂O₃-Verhältnis von ca. 60 und einem Austauschgrad für Cu von ca. 70%.

| Drehzahl / Pme | | Temp. vor Katalysator [°C] | KW-Konversion [%] | Partikel Konversion [%] |
|---|---|---|---|---|
| [l/min] | [bar] | | | |
| 2000 | 1 | 153 | 31,8 | 37,4 |
| 2000 | 4 | 307 | 25,0 | 38,7 |

## Patentansprüche

1. Verwendung eines Katalysators zur Verringerung der Partikelmasse und/oder -größe im Abgas einer Dieselmaschine, dadurch gekennzeichnet, daß der Katalysator ein Zeolith vom Faujasit-Typ, vom Pentasil-Typ oder vom Mordenit-Typ mit sauren Eigenschaften ist und für langkettige und aromatische Kohlenwasserstoffe crackende Eigenschaften aufweist.

2. Verwendung gemäß Anspruch 1, dadurch gekennzeichnet, daß der Zeolith ein dealuminierter Faujasit ist.

3. Verwendung gemäß Anspruch 1, dadurch gekennzeichnet, daß der Zeolith vom Pentasil-Typ ein SiO₂/Al₂O₃-Verhältnis von 25 bis 2000, bevorzugt zwischen 40 bis 600, aufweist.

4. Verwendung gemäß Anspruch 1, dadurch gekennzeichnet, daß der Zeolith ein dealuminierter Mordenit ist.

5. Verwendung gemäß einem oder mehrerer der Ansprüche 1 bis 4, dadurch gekennzeichnet, daß der Zeolith eines oder mehrere Elemente aus der Gruppe der Elemente der 2. Hauptgruppe des Periodischen Systems der Elemente und/oder der Seltenerd-Elemente enthält.

6. Verwendung gemäß einem oder mehrerer der Ansprüche 1 bis 4, dadurch gekennzeichnet, daß der Zeolith ein oder mehrere Übergangselemente enthält.

7. Verwendung gemäß Anspruch 6, dadurch gekennzeichnet, daß die Übergangselemente Cu, Ni, Co, Fe, Cr, Mn und/oder V sind.

8. Verwendung gemäß Anspruch 7, dadurch gekennzeichnet, daß der Zeolith als Übergangselement Cu enthält.

## Claims

1. The use of a catalyst for reducing the quantity and/or size of particles in the exhaust gases of a diesel engine, characterized in that the catalyst is a zeolite of the faujasite, pentasil or mordenite type with acidic properties and possesses cracking properties for long-chain and aromatic hydrocarbons.

2. The use claimed in claim 1, characterized in that the zeolite is a dealuminized faujasite.

3. The use claimed in claim 1, characterized in that the zeolite of the pentasil type has an SiO₂ to Al₂O₃ ratio of 25 to 2000 and preferably between 40 and 600.

4. The use claimed in claim 1, characterized in that the zeolite is a dealuminized mordenite.

5. The use claimed in one or more of claims 1 to 4, characterized in that the zeolite contains one or more elements from the group of elements of the 2nd main group of the periodic system of elements and/or the rare earth elements.

6. The use claimed in one or more of claims 1 to 4, characterized in that the zeolite contains one or more transition elements.

7. The use claimed in claim 6, characterized in that the transition elements are Cu, Ni, Co, Fe, Cr, Mn and/or V.

8. The use claimed in claim 7, characterized in that the zeolite contains Cu as the transition element.

## Revendications

1. Utilisation d'un catalyseur pour la réduction de la masse et/ou de la taille de particules dans des gaz d'échappement d'un moteur Diesel, caractérisée en ce que le catalyseur est une zéolithe du type faujasite, du type pentasile ou du type mordénite avec des caractéristiques acides et présente des caractéristiques permettant un craquage des hydrocarbures aromatiques et à longues chaînes.

2. Utilisation selon la revendication 1, caractérisée en ce que la zéolithe est une faujasite désaluminisée.

3. Utilisation selon la revendication 1, caractérisée en ce que la zéolithe de type pentasile présente un rapport SiO₂/Al₂O₃ de 25 à 2 000, de préférence de 40 à 600.

4. Utilisation selon la revendication 1, caractérisée en ce la zéolithe est une mordénite désaluminisée.

5. Utilisation selon une ou plusieurs des revendications 1 à 4, caractérisée en ce que la zéolithe contient un ou plusieurs éléments du groupe constitué des éléments du deuxième groupe principal du système périodique des éléments et/ou des éléments de terres rares.

6. Utilisation selon une ou plusieurs des revendications 1 à 4, caractérisée en ce que la zéolithe contient un ou plusieurs éléments de transition.

7. Utilisation selon la revendication 6, caractérisée en ce que les éléments de transition sont Cu, Ni, Co, Fe, Cr, Mn et/ou V.

8. Utilisation selon la revendication 7, caractérisée en ce que la zéolithe contient comme élément de transition Cu.
